# DEMANDE DE BREVET EUROPEEN

(11) **EP 2 031 851 A2**
(43) Date de publication de la demande: **04.03.2009**
(21) Numéro de dépôt: 08163333.1
(22) Date de dépôt: 29.08.2008
(51) Int. Cl.: H04M 3/42, H04M 3/487

(54) **Procédé et système de fourniture d'au moins une information d'appel**

(30) Priorité: 30.08.2007 FR 0757271
(71) Demandeur: FRANCE TELECOM, 75015 Paris (FR)
(72) Inventeur: Bouvet, Bertrand, 22700 PERROS-GUIREC (FR)
(74) Mandataire: Bioret, Ludovic

(57) **Abrégé**

L'invention concerne un procédé de fourniture d'au moins une information concernant un appel émis par un utilisateur depuis un terminal, par l'intermédiaire d'un réseau de communication.

Selon l'invention, un tel procédé comprend :
- une étape d'analyse, par une entité dudit réseau de communication, d'un identifiant de destination dudit appel, fournissant au moins un paramètre représentatif dudit appel ;
- une étape d'obtention, par ladite entité, de ladite au moins une information en fonction dudit au moins un paramètre d'appel.

## Description

La présente invention se rapporte au domaine des télécommunications.

La présente invention se rapporte plus particulièrement à l'information des utilisateurs lorsqu'ils utilisent un service offert par un opérateur ou par un fournisseur de service par le biais d'un terminal de communication.

Depuis quelques années, le nombre de réseaux de télécommunications et d'opérateurs s'est considérablement accru notamment grâce aux nouvelles technologies mais également par l'intermédiaire de réglementations qui ont permis la fin de situations monopolistiques de grands opérateurs de télécommunications. A l'heure actuelle, on trouve trois grands types de réseau de télécommunication et une multitude d'opérateurs, incluant notamment des opérateurs virtuels mobiles. Ces types de réseau sont les suivants :
- réseau fixe RTC (Réseau Téléphonique Commuté) ;
- réseau mobile GSM (de l'anglais « Global System for Mobile » pour « Système Global pour Mobile ») et ses extensions ;
- réseau VoIP (de l'anglais « Voice Over IP » pour « Voix sur IP ») basés sur des normes telles que l'H323 et des protocoles de type SIP (de l'anglais « Session Initialisation Protocol » pour « Protocole d'initialisation de session »).

De récentes réglementations, visant à favoriser la concurrence ont obligé les opérateurs de télécommunications à offrir des services de portabilité de Numéro. Ainsi, lorsqu'un client souhaite changer d'opérateur ou de service de téléphonie (comme par exemple un désabonnement du service téléphonique RTC au profit d'une utilisation d'une offre de service VoIP), il peut conserver son numéro.

Ces récents changements ont conduit les opérateurs à modifier les offres de services proposées à leurs clients, et donc leurs modèles économiques. Ainsi, ces modèles économiques de services de télécommunications ont considérablement évolués passant d'un modèle de paiement à l'usage vers des modèles forfaitaires mais n'incluant pas généralement l'ensemble des numéros joignables dont certains restent facturés à l'usage, comme par exemple les numéros spéciaux de type service Audiotel, numéros mobiles, numéros DOM/TOM, numéros internationaux,...

Ainsi, les grilles tarifaires des opérateurs et des fournisseurs de services sont devenues extrêmement complexes et difficilement lisibles pour les clients et utilisateurs. Ainsi, par exemple, en fonction de leurs types d'abonnement, deux utilisateurs différents qui font appel à un même service ne paieront pas le même prix.

L'invention est liée aux considérations suivantes, mises en évidence par les inventeurs. A l'heure actuelle, compte tenue des évolutions évoquées précédemment, lorsqu'un client souhaite simplement téléphoner, il compose un numéro mais ne dispose d'aucune information sur le type de réseau utilisé pour joindre son correspondant et donc sur le prix de la communication.

Ce client ne sait pas notamment si le numéro appelé est inclus dans le forfait si il dispose de ce type d'abonnement, à quel prix il va être facturé dans le cas d'une facturation à l'usage sachant qu'en fonction du type de réseau joint (RTC, GSM, VoIP) ou en fonction de l'opérateur qui termine l'appel, c'est-à-dire celui qui est lié au destinataire de la communication, le prix est totalement différent.

En l'état actuel, la seule information dont peut éventuellement disposer le client sur son appel est sa durée, qui, selon le type de terminal utilisé, s'affiche à la fin de la communication par le biais d'un écran. Ainsi, un client qui compose un numéro surtaxé (par exemple un numéro dont le prix de la communication est facturé à 0,34 € par minute) n'est pas à même de connaître le montant que cet appel lui est facturé. En effet, cette facturation peut dépendre de nombreux paramètres, tels que le temps d'attente (qui peut être gratuit), l'application d'une surtaxe complémentaire (en fonction d'un forfait de l'utilisateur, par exemple). Ces divers paramètres, combinés au fait que le temps indiqué sur l'éventuel écran du terminal est un temps global de communication, ne permettent donc pas au client d'être correctement informé.

La solution proposée par l'invention ne présente pas ces inconvénients de l'art antérieur. Elle concerne en effet un procédé de fourniture d'au moins une information concernant un appel émis par un utilisateur depuis un terminal, par l'intermédiaire d'un réseau de communication.

Selon l'invention, un tel procédé comprend :
- une étape d'analyse, par une entité dudit réseau de communication, d'un identifiant de destination dudit appel, fournissant au moins un paramètre représentatif dudit appel ;
- une étape d'obtention, par ladite entité, de ladite au moins une information en fonction dudit au moins un paramètre d'appel ; ladite au moins une information comprenant des indications appartenant au groupe comprenant au moins :

- une indication d'un opérateur de destination dudit appel ;
- une indication d'un fournisseur de service dudit appel ;
- une indication d'un coût courant dudit appel ;
- une indication d'un coût global dudit appel ;
- une indication d'un coût unitaire ;
- une indication de localisation dudit destinataire ;
- une indication du type de réseau téléphonique du destinataire (RTC, GSM, VoIP,....) ;
- une indication du service téléphonique appelé (numéro local, numéro national, service spécial type Audiotel/numéro Azur/ numéro Vert / numéro Indigo, numéro international (pays de destination), numéro Dom/Tom,...) ;
- une indication sur la partie effectivement connectée à l'appelant (terminal téléphonique, messagerie, serveur applicatif,...) ;
- une indication sur le coût dudit appel par rapport à une donnée de facturation relative audit utilisateur.

Ainsi, à la différence des mécanismes de l'art antérieur qui ne permettent d'afficher qu'une information de durée d'appel mesurée par le terminal, l'invention, de par l'identification ingénieuse du problème posé aux utilisateurs, permet la fourniture d'informations liées à l'identifiant téléphonique de destination. Cette fourniture passe dans un premier lieu par une analyse d'un identifiant de destination, qui peut par exemple être un numéro de téléphone composé par l'utilisateur. Dans d'autres modes de réalisation, basé sur d'autres technologies de communication, l'identifiant analysé peut être un identifiant SIP (de l'anglais « Session Initialisation Protocol » pour « Protocole d'initialisation de session »). Selon un autre mode de réalisation, l'identifiant de destination peut se présenter sous la forme d'une adresse de courrier électronique.

Une telle analyse permet d'obtenir des paramètres sur l'appel téléphonique émis par l'utilisateur qui permettent l'obtention, par le biais de moyens appropriés, des informations à fournir à l'utilisateur.

Ainsi, l'information fournie à l'utilisateur est variée et peut notamment servir à pallier des difficultés de compréhension des utilisateurs, par exemple au niveau des tarifications appliquées à un certain type d'appel. L'invention apporte donc une contribution importante à l'information des utilisateurs.

Notamment, l'invention permet de fournir une variété d'informations plus grande que la simple information de durée d'appel qui est fournie par certains terminaux de l'art antérieur. En effet, selon l'invention, ces informations sont communiquées grâce à l'utilisation de données concernant le destinataire de l'appel, données n'ayant pas fait l'objet, préalablement à l'identification du problème par les inventeurs, d'utilisations au bénéfice des utilisateurs.

Selon un mode de réalisation particulier de l'invention, ledit procédé comprend en outre une étape d'émission, vers ledit terminal, d'au moins une donnée représentative de ladite au moins une information.

Ainsi, le procédé selon l'invention permet de fournir des renseignements à l'utilisateur qui est l'initiateur de l'appel. Ces renseignements sont véhiculés par le biais d'une donnée représentative de l'information donnée qui, pour une même information de base, peut bien entendu être différente selon des paramètres matériels variés. Dans un mode de réalisation particulier de l'invention, les renseignements fournis à l'utilisateur peuvent en plus faire l'objet de filtrage, par exemple en fonction de préférences fournies par lui provoquant par là même une construction différente des données représentatives.

Selon une caractéristique particulière de l'invention, ledit procédé comprend en outre une étape d'adaptation de ladite au moins une donnée représentative en fonction d'un type dudit terminal.

Ainsi, le procédé selon l'invention permet de tenir compte du type de matériel à disposition de l'utilisateur. En effet, tous les utilisateurs destinataires des renseignements pouvant être obtenus par le procédé selon l'invention ne disposent pas du même type de terminal. Certains terminaux peuvent disposer de capacités d'affichage tandis que d'autres terminaux sont de simples téléphones analogiques. L'invention permet de tirer partie de l'ensemble des terminaux en adaptant les données représentatives en fonction du terminal auquel elles sont adressées.

Selon un mode de réalisation particulier de l'invention, ladite étape d'émission est mise en oeuvre préalablement à un établissement de la communication engendrée par ledit appel.

Ainsi, l'invention permet à l'utilisateur qui passe un appel téléphonique d'avoir par exemple connaissance du coût unitaire à la minute de cet appel avant que la communication ne débute, ou encore de savoir si cet appel sera compris dans son forfait de communication ou non.

Selon une caractéristique particulière de l'invention, ladite au moins une donnée représentative est sous une forme appartenant au groupe comprenant au moins :
- des données audio ;
- des données vidéo ;
- des données textuelles.

Ainsi, les données représentatives peuvent être de tout type multimédia. Il est donc possible, pour un terminal qui dispose de capacités d'affichage, de recevoir des données textuelles qui pourront être affichées par lui, tandis qu'un terminal analogique sans capacité d'affichage pourra ne recevoir que des données audio, telles que des messages audio.

L'invention concerne également un système de communication muni de moyens d'établissement d'un appel émis par un utilisateur depuis un terminal, **caractérisé en ce qu**'il comprend :
- des moyens d'analyse d'un identifiant de destination dudit appel, fournissant au moins un paramètre représentatif dudit appel ;
- des moyens d'obtention, en fonction dudit au moins un paramètre d'appel, d'une information concernant ledit appel, telle que définie ci-dessus.

L'invention concerne également un dispositif de fourniture d'au moins une information concernant un appel émis par un utilisateur depuis un terminal, par l'intermédiaire d'un réseau de communication.

Selon l'invention, un tel dispositif comprend :
- des moyens d'analyse d'un identifiant de destination dudit appel fournissant au moins un paramètre représentatif dudit appel ;
- des moyens d'obtention de ladite au moins une information en fonction dudit au moins un paramètre d'appel, telle que définie ci-dessus.

Selon un mode de réalisation particulier de l'invention, ledit dispositif comprend en outre :
- des moyens d'émission, vers ledit terminal, d'au moins une donnée représentative de ladite au moins une information ;
- des moyens d'adaptation de ladite au moins une donnée représentative en fonction d'un type dudit terminal.

Dans d'autres modes de réalisation, un tel dispositif selon l'invention comprend des moyens complémentaires de mise en oeuvre du procédé de fourniture tel que décrit précédemment.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé de fourniture tel que décrit précédemment.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est un diagramme de bloc illustrant le principe général de l'invention ;
- les figures 2A et 2B présentent le mécanisme général de transmission d'un appel ;
- la figure 3 décrit une mise en oeuvre du procédé de l'invention dans le cas d'un réseau RTC ;
- La figure 4 décrit une mise en oeuvre du procédé de l'invention dans le cas d'un réseau IMS ;
- La figure 5 décrit une mise en oeuvre du procédé dans le cas d'un appelant d'un réseau IMS vers le réseau RTC ;
- La figure 6 décrit l'architecture fonctionnelle d'un dispositif mettant en oeuvre le procédé de l'invention ;
- La figure 7 décrit l'architecture matérielle d'un dispositif mettant en oeuvre le procédé de l'invention.

Par la suite, on utilise les abréviations suivantes dont on présente brièvement une définition :
- « AS » de l'anglais « Application Server » pour « serveur d'application » ;
- « CAA » pour Commutateur à Autonomie d'Acheminement ;
- « CAP » de l'anglais « Camel Application Part » pour « Partie d'application Camel »
- « CRBT » de l'anglais « Colored Ring Back Tone » pour « tonalité de retour personnalisée » ;
- « CT » pour « Commutateur de Transit » ;
- « ENUM » de l'anglais « Electronic NUMbering » pour « numérotation électronique » ;
- « GSM » de l'anglais « Global System Mobile » pour « Système Mobile Global » ;
- « HSS » de l'anglais « Home Subscriber Server » pour « Serveur de Souscription Résidentiel » ;
- « I-CSCF » de l'anglais « Interrogation Call State Control Function » pour « serveur d'interrogation de fonction de contrôle d'état d'appel»
- « IFC » de l'anglais « Initial Filter Criteria » pour « Critère de Filtration Initial »
- « IMS » de l'anglais « IP Multimedia Subsystem » pour « Sous système Multimédia basé sur IP »
- « INAP » de l'anglais « Intelligent Network Application Protocol » pour « Protocole Applicatif pour Réseau intelligent »
- « ISDN » de l'anglais « Integrated Services Digital Network » pour « Réseau Numérique à Intégration de Services »
- « LDAP » de l'anglais « Lightweight Directory Application Protocol » pour « Protocole d'interrogation et de modification des services d' annuaires » ;
- « MAP » de l'anglais « Mobile Application Part » pour « Partie d'Applicatif Mobile » ;
- « MGCF » de l'anglais « Media Gateway Control Function » pour « Fonction de contrôle des passerelles média » ;
- « MGW » de l'anglais « Media GateWay » pour « Passerelle Média »
- « P-CSCF » de l'anglais « Proxy Call State Control Function » pour « serveur proxy de fonction de contrôle d'état d'appel » ;
- « RI » pour « Réseau Intelligent » ;
- « RNIS » pour « Réseau Numérique à Intégration de Services » ;
- « RTC » pour « Réseau Téléphonique Commuté » ;
- « S-CSCF » de l'anglais « Serving Call State Control Function » pour « serveur de service de fonction de contrôle d'état d'appel » ;
- « SNMP » de l'anglais « Simple Network Management Protocol » pour « protocole simplifié de gestion de réseau » ;
- « SIP » de l'anglais « Session Initiation Protocol » pour « Protocole d'initialisation de session » ;
- « SPN » pour « Serveur de Portabilité de Numéros » ;
- « SI » pour « Système d'Informations » ;
- « SS7 » pour « Signalisation Sémaphore numéro 7 » ;
- « VoIP » de l'anglais « Voice Over IP » pour « Voix sur IP ».

L'invention permet donc la fourniture d'informations spécifiques liées aux communications passées par un client ou un utilisateur d'un service ou d'un réseau de communication. Ces informations présentent l'avantage d'être accessibles au client en temps réel, c'est-à-dire qu'il n'est pas nécessaire d'attendre de recevoir la facture de l'opérateur ou du fournisseur de service pour prendre connaissance d'informations importantes quant à la communication que l'utilisateur s'apprête ou est en train de passer. Elles peuvent ensuite permettre à l'utilisateur de prendre des décisions quant à l'usage des ces services. A l'heure actuelle, de telles décisions ne peuvent être prises du fait de l'opacité des tarifs appliqués et de la multiplicité des réseaux mis en oeuvre pour faire transiter les appels.

L'invention ne présente pas ces inconvénients et consiste, de manière générale, à fournir à l'appelant par exemple pendant la phase d'établissement d'appel ou alors pendant toute la durée de la communication sous forme vocale/écrite/vidéo des informations plus ou moins riches concernant la communication en cours parmi lesquelles le nom de l'opérateur de l'appelé, le type de réseau (RTC, GSM, VoIP) et la tarification de l'appel.

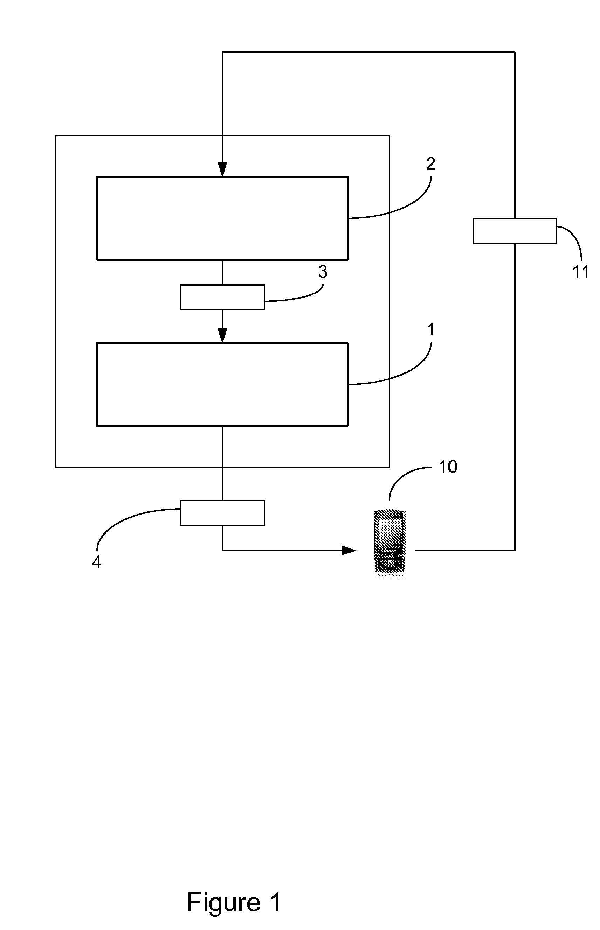

On présente, en relation avec la figure 1, le procédé selon l'invention.

Un utilisateur utilise un terminal 10 pour joindre un service ou un correspondant. Pour ce faire il saisit un identifiant d'appel (11), qui peut dans certains modes de réalisation être un numéro de téléphone. L'identifiant d'appel (11) peut également être une adresse de courrier électronique ou une adresse de messagerie instantanée, en fonction du réseau de communication employé et du destinataire de la communication. Un tel identifiant d'appel (11) peut dans certains cas permettre de joindre un individu ou un service proposé par un fournisseur de services.

L'identifiant d'appel est, dans un premier temps, analysé (2) et des paramètres d'appels (3) sont extraits. De tels paramètres (3) peuvent par exemple être des préfixes de portabilité ou encore une syntaxe particulière du numéro de téléphone (pour des numéros spéciaux par exemple) ou encore un nom de domaine spécifique d'une adresse de courrier électronique. L'obtention (1) de l'information (4) fournie au terminal (10) est alors réalisée en fonction de ces paramètres, par exemple sous la forme d'une interrogation d'une base de données. Cette information peut par la suite faire l'objet d'un traitement en fonction du type de terminal auquel elle doit être adressée.

Ainsi, l'invention permet, au moins préalablement à l'établissement d'une communication, de fournir à un utilisateur de terminal des informations sur cette communication qu'il s'apprête à passer. On se distingue donc fortement des techniques de l'art antérieur, notamment basées sur la mise en oeuvre de services vocaux interactifs qui ne peuvent fournir une telle information que quand la communication est déjà établie, c'est-à-dire après la phase d'établissement d'appel. De plus, les informations fournies par les techniques de l'art antérieur sont souvent parcellaires là ou les informations fournies par l'invention présentent un niveau de détail lié notamment au croisement de données concernant l'utilisateur appelant, le numéro qu'il compose et des bases de données de facturation et de cartographie des réseaux de communication.

Ainsi, par exemple, dans un mode de réalisation spécifique de l'invention, il est possible, en plus de l'identifiant d'appel, de prendre en compte des préférences d'utilisateur (obtenues par le biais de son propre identifiant d'appel ou par le biais de son identifiant de compte (AID) auprès d'une base de données) pour obtenir auprès d'un système adéquat, le prix que paiera l'utilisateur pour cette communication.

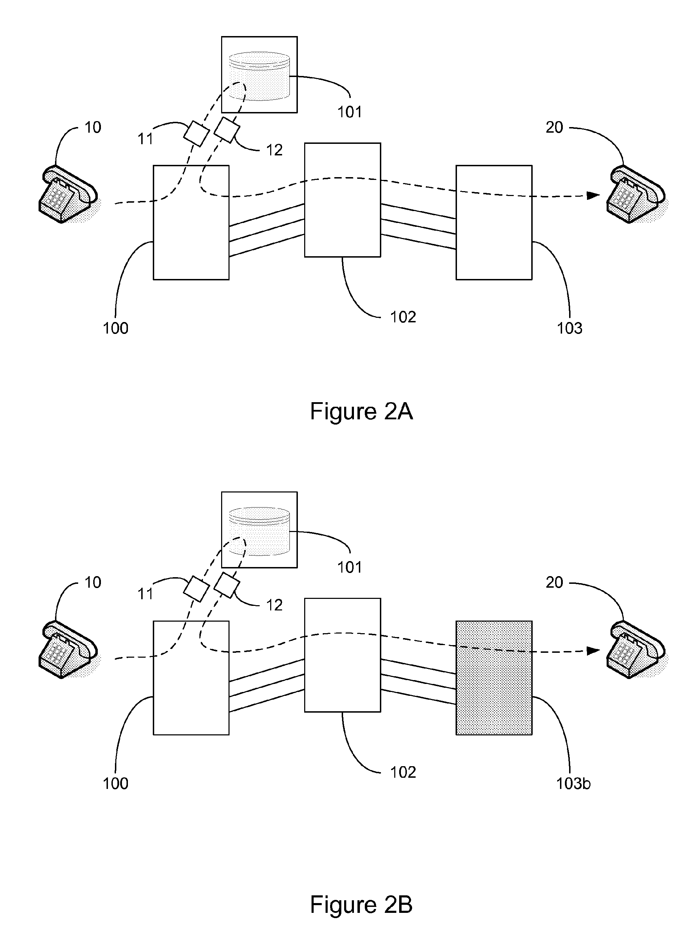

L'invention peut être mise en oeuvre dans tous les types de réseaux de communication. On présente, en relation avec les figures 2A et 2B, le fonctionnement d'un appel téléphonique standard émis à partir du réseau téléphonique commuté avec, dans la figure 2A, le cas d'un appel « intra RTC », c'est-à-dire sans qu'il y ait de changement d'opérateur et dans la figure 2B, un appel vers un numéro ayant fait l'objet d'un portage chez un opérateur différent de l'opérateur de l'appelant. Dans ces mécanismes tels qu'ils sont mis en oeuvre à l'heure actuelle, une base de données de portabilité est consultée à chaque appel (mécanisme dit de « All Call Query » pour « requête à chaque appel »).

Dans ces figures 2A et 2B, un appelant A, disposant d'un terminal 10 cherche à joindre un appelé B, disposant également d'un terminal 20. Le terminal 10 de l'appelant A est connecté à un commutateur local CAA 100. Le terminal 20 de l'appelé B est connecté à un commutateur local CAA 103. Ces commutateurs sont reliés par le biais de circuits à un central téléphonique CT 102.

Dans l'exemple de la figure 2A, lors de l'établissement de l'appel téléphonique, le commutateur local de l'appelant A 100 interroge une base de données de portabilité de numéro SPN 101 en fournissant l'identifiant d'appel 11 (par exemple le numéro de téléphone du destinataire B de la communication à établir). Quand cet identifiant 11 n'est pas inscrit dans la base de données de la liste des numéros portés, l'appel est routé de manière standard dans le réseau nominal RTC vers le destinataire (par exemple B) et la communication se déroule de manière classique. L'identifiant 11 est donc retourné 12, sans modification, de manière standard au commutateur local de l'appelant A 100.

Dans l'exemple de la figure 2B, l'identifiant d'appel 11 a fait l'objet d'un portage chez un opérateur BB différent de l'opérateur AA de l'appelant A. Le commutateur local de l'appelé B 103b est donc un commutateur de cet opérateur BB. De manière habituelle, le commutateur local de l'appelant A 100 interroge une base de données de portabilité de numéro SPN 101 en fournissant l'identifiant d'appel 11. La base de données de portabilité de numéro 101 fournit alors 12, en retour, le préfixe technique du commutateur local de l'appelé B ainsi que l'identifiant d'appel 11.

Pour tirer parti de ce mécanisme d'appel mis en place, notamment depuis la mise en place des diverses réglementations concernant la portabilité des numéros, les inventeurs sont parvenus à lier la base des sources de données concernant notamment les portages de numéro à des données externes, provenant du système d'information de l'opérateur pour fournir au client des informations pertinentes sur les communications qu'il établit.

Par la suite, on présente notamment les cas de mise en oeuvre du procédé de l'invention au sein d'un réseau RTC, au sein d'un réseau IMS (de l'anglais « IP Multimédia Subsystem » pour « sous-système multimédia basé sur le réseau IP »). Il est clair cependant que l'invention ne se limite pas à cette application particulière, mais peut également être mise en oeuvre dans de nombreux autres cas, et par exemple dans le cas de réseaux de terminaux mobiles et plus généralement dans tous les cas où les avantages procurés par l'invention sont intéressants.

On présente dans ce mode de réalisation, la mise en oeuvre du procédé de l'invention au sein d'un réseau RTC classique. Dans ce type de réseau, tel que cela a été présenté en relation avec les figures 2A et 2B, à chaque appel téléphonique, le commutateur local de l'appelant A (CAA) interroge la base de données de portabilité de numéro SPN en fournissant l'identifiant d'appel (par exemple le numéro de téléphone du destinataire B de la communication à établir). Quand cet identifiant n'est pas inscrit dans la base de données de la liste des numéros portés, l'appel est routé de manière standard dans le réseau nominal RTC vers le destinataire (par exemple B) et la communication se déroule de manière classique.

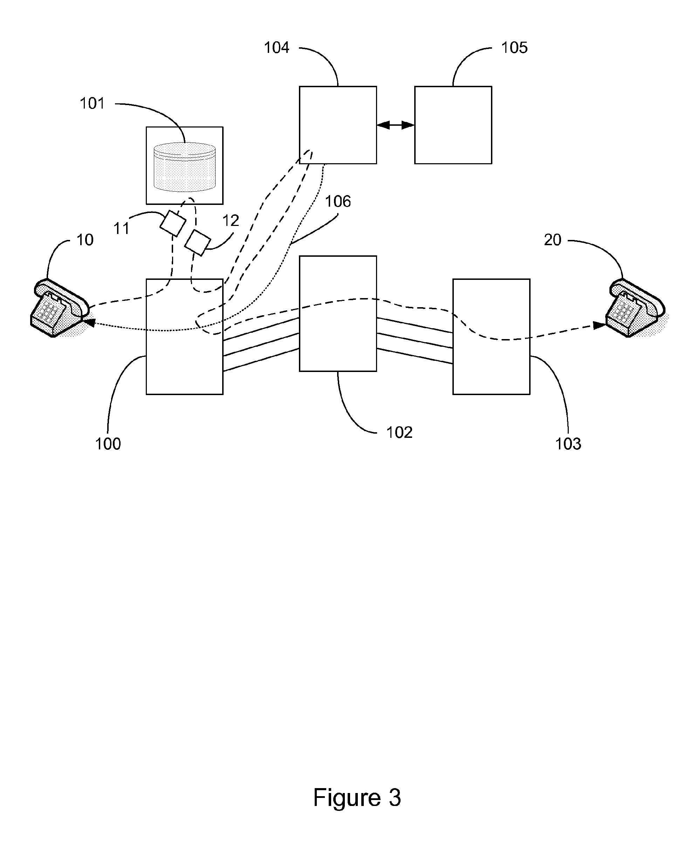

On présente en relation avec la figure 3, un mode de réalisation du procédé selon l'invention appliqué à un environnement RTC.

Dans ce mode de réalisation, les renseignements sont fournis sous la forme d'une annonce vocale à l'appelant pendant la phase de sonnerie de l'appelé. Une telle annonce pourrait par exemple être : « la communication que vous vous apprêtez à effectuer est comprise dans votre forfait » ou « la communication est en cours d'établissement par le biais d'un autre opérateur. Elle vous sera facturée 0,15 € par minute » ou encore « Appel vers le numéro X au prix de... ».

Selon une variante de diffusion du renseignement, il est envisagé, conjointement à l'information du client, de diffuser un retour de sonnerie classique en arrière fond pour ne pas perturber les habitudes des utilisateurs. Ainsi, en même temps qu'est diffusée l'information concernant l'appel, on diffuse l'information de retour de sonnerie habituelle.

Cette annonce est par exemple sélectionnée en fonction de la présence ou non d'un préfixe de portabilité suite à l'analyse de l'identifiant téléphonique de destination et à l'obtention de l'information de portabilité auprès de la base de données de portabilité (SPN).

Ainsi, l'utilisateur A, à l'aide de son terminal 10, compose le numéro de B. Le CAA de A 100, interroge le SPN 101 pour savoir si le numéro de B (11) a fait l'objet d'un portage. Le CAA de A 100 déclenche, à la réception de l'identifiant 12 issu du SPN 101, le service d'obtention de l'information 104. Ce service analyse le numéro 12 de B, tel qu'il est rendu par le SPN 101. Le service 104 obtient également des données en provenance de systèmes connexes 105, tels que des systèmes d'information de facturation ou des bases de données d'association de préfixes. Le service 104 utilise l'ensemble des informations recueilles pour fournir (106) des renseignements adaptés au terminal 10 de l'appelant A pendant la phase d'attente précédent l'établissement de la communication.

La mise en oeuvre technique de l'invention peut, dans ce mode de réalisation, être basée sur une adaptation du service CRBT (de l'anglais « Colored Ring Back Tone » pour « Sonneries d'attente personnalisées ») déployée par les opérateurs de communication. A la base, ce service CRBT permet à un utilisateur qui reçoit des appels de choisir de diffuser une musique en lieu et place du traditionnel retour de sonnerie à l'appelant. Selon l'invention, ce service peut également être utilisé en intégrant les modifications suivantes :
- le déclenchement du service est réalisé au niveau de l'appelant et non pas au niveau de appelé ;
- la sélection de l'annonce vocale à jouer pendant la phase de sonnerie est réalisée en fonction de la présence ou nom du préfixe de portabilité associé à l'appelé (et non pas en fonction du numéro appelant) ;
- dans le cas de la présence d'un préfixe de portabilité, il y a une consultation d'une base de données spécifique permettant de retrouver le nom de l'opérateur et le type de service (RTC, GSM, VoIP) ;
- une interrogation du système d'information de l'opérateur de l'appelant pour connaître le prix de la communication (en fonction des infos temporelles courantes, du type d'abonnement de l'appelant, du numéro appelé).

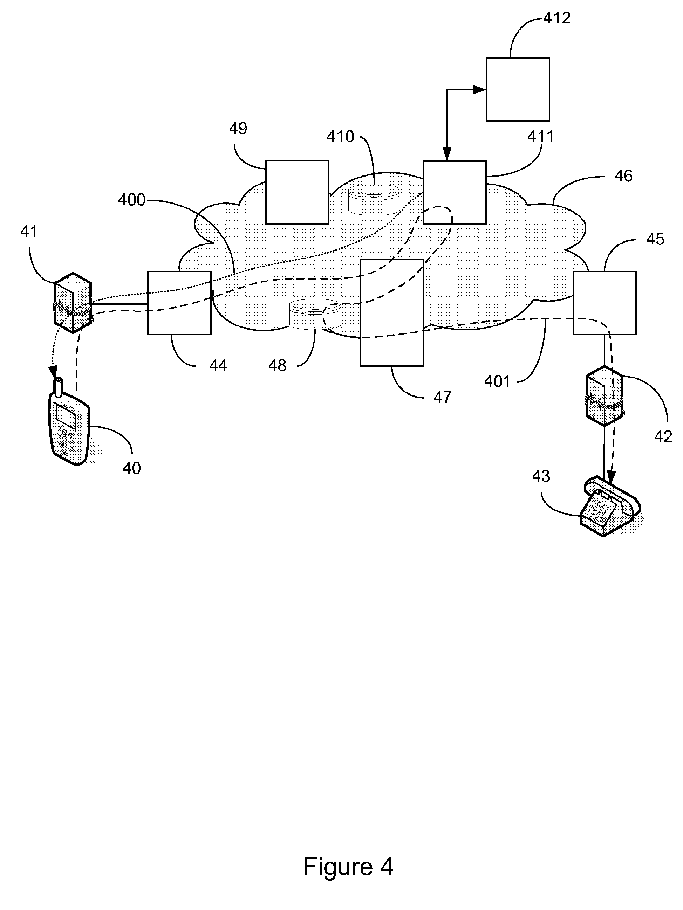

On présente, en relation avec la figure 4, un mode de mise en oeuvre de l'invention dans le cas d'un appel dit « Intra-IMS ». Cela signifie que l'appel est passé depuis un terminal 40 supportant la VoIP vers un autre terminal 43 VoIP dans un domaine IMS. Dans ce mode de réalisation particulier de l'invention, un serveur d'application 411 assure la fonction d'obtention de l'information pertinente qui fera l'objet des renseignements fournis à l'utilisateur (renseignement sur la tarification ou sur les opérateurs de routage et de destination).

Dans ce mode de mise en oeuvre, un réseau IMS est composé des entités suivantes :
- Un P-CSCF 44 qui reçoit les flux et la signalisation de la passerelle résidentielle 41 à laquelle est connecte un terminal 40 supportant les services de voix sur IP. Après une phase d'initialisation au cours de laquelle le P-CSCF 44 interroge un I-CSCF 49 (qui fait lui-même référence à une HSS 410) pour connaître le S-CSCF 47 par lequel les appels doivent transiter, le P-CSCF 44 est utilisé pour faire transiter les flux média entre le terminal 40 et le terminal 43 destinataire de l'appel.
- Le S-CSCF 47 est connecté à une base de données ENUM 48 qui contient les numéros de téléphone des clients IMS.
- Un serveur d'application 411, qui met en oeuvre ce mode particulier de réalisation de l'invention à l'initiative du S-CSCF 47 qui déclenche le service présent sur le serveur d'application 411 pour fournir de l'information sur l'appel en fonction des paramètres du numéro d'appel et réaliser l'émission (400) des données représentatives pendant la phase d'attente (par exemple sous la forme d'une annonce vocale ou d'un texte à afficher sur le terminal).
- Un SI 412 de l'opérateur de communication ou du fournisseur de service auquel le serveur d'application 411 est connecté pour obtenir, à partir des paramètres de l'appel les informations, telles que par exemple des informations de tarification ou des informations d'opérateur de destination de l'appel.
- Un P-CSCF 45 auquel est connecté un terminal 43 destinataire de l'appel par l'intermédiaire d'une passerelle résidentielle 42 fonctionnant sur le même principe que le P-CSCF 44 précédemment décrit.

Au sien de cette architecture, les appels en provenance du terminal 40 (tous ses appels sortants) transitent par le serveur d'application 411 (le déclencheur « IFC » est positionné au niveau du S-CSCF 47 pour le message « INVITE Originating », c'est-à-dire que le service peut être lancé). Dans le cas présenté en figure 4, l'appel est intra IMS donc il n'y a pas de préfixe de portabilité. L'appelant se verra donc diffuser une annonce vocale (ou vidéo si il dispose d'un terminal multimédia supportant la vidéo) : "appel intra réseau inclus dans votre forfait..."

Lors d'un appel de A (40), vers B (43) la signalisation d'appel transite par un serveur d'application 411. Au sein de la signalisation d'appel SIP le serveur d'application 411 dispose des paramètres nécessaire à la reconnaissance du type d'appel (et notamment du fait que l'appel est un appel « intra-IMS »). Ainsi, le serveur d'application 411 peut, durant la phase d'établissement de l'appel, analyser ces paramètres d'appel et obtenir, auprès d'un système d'information 412 auquel il est connecté, des informations pertinentes. La communication des renseignements à l'appelant A (sur son terminal 40) est réalisée par le biais d'une « Media Ressource Function » MRF. En fonction du type de terminal dont dispose l'appelant A, la MRF diffuse à l'appelant A des renseignements aptes à être restitués par son terminal : audio, vidéo, texte ou combinaison de ces trois média.

Dans ce mode de mise en oeuvre particulier de l'invention, il est fréquent que les appels « intra-IMS » soient gratuits et donc pas facturés au client. Dans un tel cas, il n'est pas nécessaire que le dispositif mettant en oeuvre le procédé de l'invention (ici le serveur d'application) ait une connexion au système d'information de facturation.

Ainsi, comme dans le mode de réalisation précédent lié au réseau RTC, ce mode de mise en oeuvre est réalisé par le biais d'une adaptation d'un service CRBT, à la différence toujours du fait que le déclenchement du service est réalisé au niveau de l'appelant et non plus au niveau de l'appelé.

Dans le cas d'une fourniture des renseignements par le biais d'une incrustation vidéo ou de la diffusion de texte, les informations concernant l'opérateur, le type de service peuvent être affichées en continu pendant toute la durée de la communication et être rafraîchies de manière régulière par le biais de la MRF, par exemple pour afficher un prix en fonction de la durée de la communication (rafraîchissement toutes les trente secondes, par exemple).

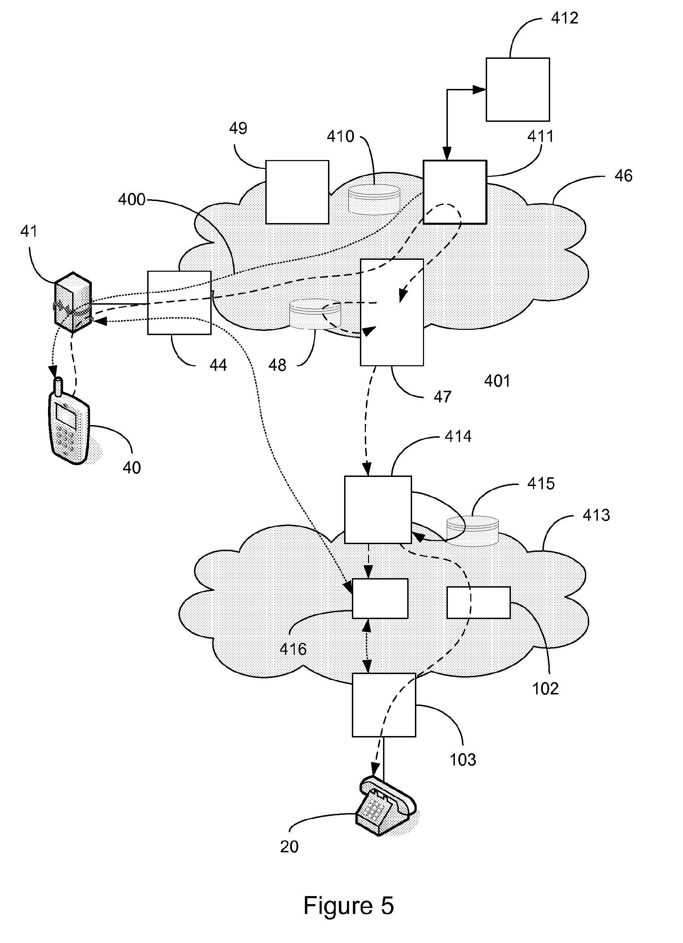

On présente, en relation avec la figure 5, une mise en oeuvre du procédé selon l'invention dans le cas d'un appel du domaine IMS 46 vers le domaine RTC 413.

L'architecture du réseau IMS est identique à celle présentée précédemment (figure 4), à la différence que les flux de signalisation ne sont pas routés vers un P-CSCF puis vers un terminal destinataire au sien du réseau IMS, mais vers un MGCF 414 qui pilote une MGW 416. Dans ce cas, l'équipement MGCF 414 est vu comme étant le premier équipement du réseau RTC 413 et c'est donc lui qui consulte la base de portabilité SPN (415). L'équipement MGCF 414 est une passerelle de signalisation qui permet de relier le réseau IMS 46 et le réseau RTC 413. Ce réseau RTC 413 comprend un central téléphonique CT 102 ainsi qu'une pluralité de CAA, dont un (103) est relié au terminal téléphonique 20 du destinataire de l'appel. Dans ce cas de figure, le MGCF 414 est équivalent au CAA 100 de la figure 1. Le MGCF 414 est le premier équipement du réseau RTC qui consulte la base de données 415 pour les aspects portabilité. Si le numéro est porté, l'appel est routé côté RTC vers l'opérateur cible. La signalisation SIP arrière peut alors être modifiée pour transporter le préfixe de portabilité. Cette info retourne via l'AS 411 qui est en coupure de la signalisation d'appel et qui peut donc appliquer la logique de service décrite précédemment.

Si le numéro appelé est porté (vers autre opérateur ou service) alors le SPN 415 retourne un préfixe de portabilité. Cette information peut être retournée au niveau de la signalisation SIP dans les messages "arrière" qui transitent par le serveur d'application 411 mettant en oeuvre le procédé de l'invention. Comme dans le cas précédent, ce serveur d'application 411 intègre un MRF (« Media function Ressource ») qui diffuse l'annonce vocale / vidéo suivant les capacités du terminal appelant et sélectionnée en fonction de la présence ou non d'un préfixe de portabilité retourné lors de l'interrogation du SPN.

Dans un mode de réalisation particulier de l'invention, il est également possible que le serveur d'application 411 ou le S-CSCF 47 soit l'équipement qui consulte une base de données de portabilité qui soit située au sein du réseau IMS 47. Ce mode de réalisation présente l'avantage d'éviter la consommation excessive de ressources au sein des réseaux de télécommunication et d'optimiser le routage d'appel. Ainsi, par exemple, si l'appelé B est porté vers un opérateur tiers IMS, l'appel ne transitera pas par le réseau RTC mais transitera depuis le domaine IMS de l'appelant A vers le domaine IMS de l'appelé B.

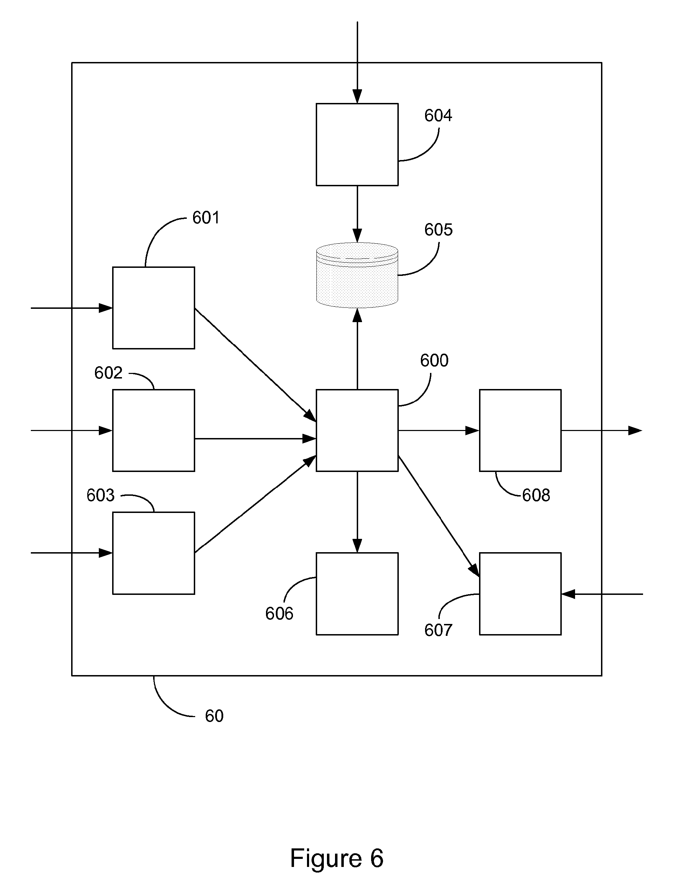

On présente, en relation avec la figure 6, l'architecture fonctionnelle d'un dispositif 60 mettant en oeuvre le procédé de l'invention. Un tel dispositif dispose des fonctionnalités suivantes :
- des Interfaces (601, 602, 603) avec les réseaux de télécommunication (RTC, GSM, VoIP) avec support des protocoles liés au service (INAP pour le RTC, CAMEL pour le GSM, SIP pour la VoIP), permettant la récupération des informations dans la base de données locale 605 (à partir du préfixe de portabilité), récupération du nom de l'opérateur destinataire et du type de service (RTC, GSM, VoIP), récupération du film vocal/vidéo à jouer ;
- un module d'administration (Web) 604 permettant à l'opérateur / tiers exploitant le service lié à l'invention de remplir la base de données 605 avec les données de service. Cette base de données 605 contient notamment une table de correspondance entre les préfixes de portabilité et les noms des opérateurs ainsi que le type de service (ex: 0150: France Télécom: service VoIP), et les différents morceaux de film vocal / video / web à concaténer pour fournir les renseignements à l'appelant (sous forme d'annonce par exemple) ;
- une base de données 605 permettant de stocker les informations liées au service ;
- un module de logique de service 600 qui a en charge l'analyse des capacités du terminal appelant (support audio, vidéo, Web), l'analyse du numéro appelé (avec ou sans préfixe de portabilité), la récupération au niveau de la base de données 605 des informations concernant le service téléphonique de l'appelé (opérateur et type de service [RTC, GSM, VoIP]) en fonction du préfixe de portabilité, l'accès au système d'information facturation de l'opérateur de l'appelant via le module d'interface système d'information opérateur 608 afin d'obtenir le tarif de cet appel (fonction du type d'abonnement de l'appelant, du numéro appelé, des infos temporelles,...), la récupération au niveau de la base de données du film vocal / audio / web à jouer à l'appelant en fonction des infos obtenues précédemment ;
- un module de ressource de diffusion d'annonce (vocale, vidéo, web) 606 qui peut être soit intégré au dispositif, soit externalisé. Ce module fonctionnel est lié au type de réseau avec lequel le serveur lié à l'invention est interfacé (serveur SRP pour le réseau RTC, serveur MRF pour le réseau VoIP IMS,....) ;
- un module d'interface 608 avec le Système d'information Facturation (SI) permettant au module Logique de service selon l'invention de récupérer les informations liées à la facturation de appel ;
- un module de supervision 607 permettant la génération de trace/log et de remonter des alarmes en cas de problèmes vers l'exploitant du service.

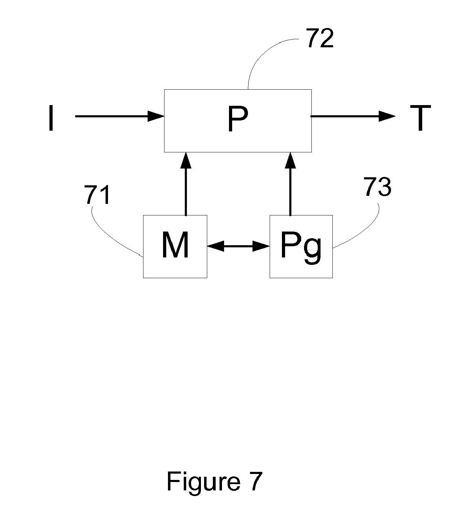

On présente, en relation avec la figure 7, un mode de réalisation d'un dispositif de mise en oeuvre du procédé selon l'invention.

Un tel dispositif comprend une mémoire 71 constituée d'une mémoire tampon, une unité de traitement 72, équipée par exemple d'un microprocesseur µP, et pilotée par le programme d'ordinateur 73, mettant en oeuvre le procédé de restitution selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée au moins une information I à transmettre (telle qu'un numéro de téléphone auquel l'appelant souhaite se connecter). Le microprocesseur de l'unité de traitement 72 met en oeuvre les étapes du procédé décrit précédemment, selon les instructions du programme d'ordinateur 73, pour délivrer une information traitée T (tel qu'un message d'attente comprenant des informations sur la communication en voie d'établissement). Pour cela, le dispositif comprend, outre la mémoire tampon 71, des moyens de formulation de requête et de réponse, et des moyens de traitement d'informations, permettant notamment l'exécution du procédé selon l'invention. Ces moyens sont pilotés par le microprocesseur de l'unité de traitement 72.

## Revendications

1. Procédé de fourniture d'au moins une information concernant un appel émis par un utilisateur depuis un terminal, par l'intermédiaire d'un réseau de communication, **caractérisé en ce qu'**il comprend :
- une étape d'analyse, par une entité dudit réseau de communication, d'un identifiant de destination dudit appel, fournissant au moins un paramètre représentatif dudit appel ;
- une étape d'obtention, par ladite entité, de ladite au moins une information en fonction dudit au moins un paramètre d'appel, ladite au moins une information comprenant des indications appartenant au groupe comprenant au moins :
- une indication d'un opérateur de destination dudit appel ;
- une indication d'un fournisseur de service dudit appel ;
- une indication d'un coût courant dudit appel ;
- une indication d'un coût global dudit appel ;
- une indication d'un coût unitaire ;
- une indication de localisation dudit destinataire ;
- une indication du type de réseau téléphonique du destinataire (RTC, GSM, VoIP,....) ;
- une indication du service téléphonique appelé (numéro local, numéro national, service spécial type Audiotel / numéro Azur / numéro Vert / numéro Indigo, numéro international (pays de destination), numéro Dom/Tom,...) ;
- une indication sur la partie effectivement connectée à l'appelant (terminal téléphonique, messagerie, serveur applicatif,...). :
- une indication sur le coût dudit appel par rapport à une donnée de facturation relative audit utilisateur.

2. Procédé de fourniture selon la revendication 1, **caractérisé en ce qu'**il comprend en outre une étape d'émission, vers ledit terminal, d'au moins une donnée représentative de ladite au moins une information.

3. Procédé de fourniture selon la revendication 2, **caractérisé en ce qu'**il comprend en outre une étape d'adaptation de ladite au moins une donnée représentative en fonction d'un type dudit terminal.

4. Procédé de fourniture selon l'une quelconque des revendications 2 et 3, **caractérisé en ce que** ladite étape d'émission est mise en oeuvre préalablement à un établissement de la communication engendrée par ledit appel.

5. Procédé de fourniture selon l'une quelconque des revendications 2 et 3, **caractérisé en ce que** ladite au moins une donnée représentative est sous une forme appartenant au groupe comprenant au moins :
- des données audio ;
- des données vidéo ;
- des données textuelles.

6. Système de communication muni de moyens d'établissement d'un appel émis par un utilisateur depuis un terminal, **caractérisé en ce qu'**il comprend :
- des moyens d'analyse d'un identifiant de destination dudit appel, fournissant au moins un paramètre représentatif dudit appel ;
- des moyens d'obtention, en fonction dudit au moins un paramètre d'appel, d'une information concernant ledit appel, ladite au moins une information comprenant des indications appartenant au groupe comprenant au moins :
- une indication d'un opérateur de destination dudit appel ;
- une indication d'un fournisseur de service dudit appel ;
- une indication d'un coût courant dudit appel ;
- une indication d'un coût global dudit appel ;
- une indication d'un coût unitaire ;
- une indication de localisation dudit destinataire ;
- une indication du type de réseau téléphonique du destinataire (RTC, GSM, VoIP,....) ;
- une indication du service téléphonique appelé (numéro local, numéro national, service spécial type Audiotel / numéro Azur / numéro Vert / numéro Indigo, numéro international (pays de destination), numéro Dom/Tom,...) ;
- une indication sur la partie effectivement connectée à l'appelant (terminal téléphonique, messagerie, serveur applicatif,...). :
- une indication sur le coût dudit appel par rapport à une donnée de facturation relative audit utilisateur.

7. Dispositif de fourniture d'au moins une information concernant un appel émis par un utilisateur depuis un terminal, par l'intermédiaire d'un réseau de communication, **caractérisé en ce qu'**il comprend :
- des moyens d'analyse d'un identifiant de destination dudit appel fournissant au moins un paramètre représentatif dudit appel ;
- des moyens d'obtention de ladite au moins une information en fonction dudit au moins un paramètre d'appel, ladite au moins une information comprenant des indications appartenant au groupe comprenant au moins :
- une indication d'un opérateur de destination dudit appel ;
- une indication d'un fournisseur de service dudit appel ;
- une indication d'un coût courant dudit appel ;
- une indication d'un coût global dudit appel ;
- une indication d'un coût unitaire ;
- une indication de localisation dudit destinataire ;
- une indication du type de réseau téléphonique du destinataire (RTC, GSM, VoIP,....) ;
- une indication du service téléphonique appelé (numéro local, numéro national, service spécial type Audiotel / numéro Azur / numéro Vert / numéro Indigo, numéro international (pays de destination), numéro Dom/Tom,...) ;
- une indication sur la partie effectivement connectée à l'appelant (terminal téléphonique, messagerie, serveur applicatif,...). :
- une indication sur le coût dudit appel par rapport à une donnée de facturation relative audit utilisateur.

8. Dispositif selon la revendication 8, **caractérisé en ce qu'**il comprend en outre :
- des moyens d'émission, vers ledit terminal, d'au moins une donnée représentative de ladite au moins une information ;
- des moyens d'adaptation de ladite au moins une donnée représentative en fonction d'un type dudit terminal.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de fourniture selon l'une au moins des revendications 1 à 6, lorsqu'il est exécuté sur un ordinateur.
